# EUROPÄISCHE PATENTSCHRIFT

(11) **EP 1 753 921 B1**
(45) Veröffentlichungstag und Bekanntmachung des Hinweises auf die Patenterteilung: **10.07.2013**
(21) Anmeldenummer: 05752617.0
(22) Anmeldetag: 24.05.2005
(51) Int. Cl.: E02F 3/84, E02F 9/20

(54) **VERFAHREN ZUR STEUERUNG EINER OBERFLÄCHENVERÄNDERNDEN MASCHINE**
METHOD FOR CONTROLLING A SURFACE MODIFICATION MACHINE
PROCÉDÉ POUR CONTRÔLER UN ENGIN POUR MODIFIER DES SURFACES

(30) Priorität: 24.05.2004 EP 04012226
(43) Veröffentlichungstag der Anmeldung: 21.02.2007
(73) Patentinhaber: Leica Geosystems AG, 9435 Heerbrugg (CH)
(72) Erfinder: WOON, Clement, CH-9435 Heerbrugg (CH); STEGMAIER, Peter A., CH-6946 Ponte Capriasca (CH); SCHNEIDER, Klaus, A-6850 Dornbirn (AT); NIX, Martin, CH-9445 Rebstein (CH)
(74) Vertreter: Kaminski Harmann
(86) Internationale Anmeldenummer: PCT/EP2005/005595
(87) Internationale Veröffentlichungsnummer: WO 2005/116348

(56) Entgegenhaltungen:
- DE-A1- 19 743 534
- US-A- 5 631 658
- US-A- 5 987 383
- US-A- 5 988 862
- US-A- 6 016 118
- US-B1- 6 619 406
- GREENSPUN PHILIP: "Site Controller: A system for computer-aided civil engineering and construction" [Online] Februar 1993 (1993-02), , M.I.T. CAMBRIDGE, AITR-1408 , XP002308289 Gefunden im Internet: URL:ftp://publications.ai.mit.edu/ai-publi cations/pdf/AITR-1408.pdf> [gefunden am 2004-11-26] Seite 43 - Seite 81
- DE KEIZER CEES ET AL: "A New Generation DP/DT System for Dredging Vessels" DYNAMIC POSITIONING CONFERENCE, 18. Oktober 2000 (2000-10-18), XP002306423
- WITZGALL CHRISTOPH, BERNAL JAVIER, CHEOK GERALDINE: "TIN Techniques for data analyses and surface construction; NISTIR 7078" [Online] Januar 2004 (2004-01), NATIONAL INSTITUTE OF STANDARDS AND TECHNOLOGY , GAITHERSBURG , XP002308290 Gefunden im Internet: URL:http://www.bfrl.nist.gov/861/CMAG/publ ications/NISTIR_7078_TINreport_final.pdf> [gefunden am 2004-11-26] das ganze Dokument

## Beschreibung

Die Erfindung betrifft ein Verfahren zur Steuerung einer oberflächenverändernden Maschine nach dem Oberbegriff des Anspruchs 1 sowie ein Computerprogrammprodukt nach Anspruch 12.

Zur Bearbeitung von Oberflächen wird eine Vielzahl von oberflächenverändernden Maschinen, Geräten oder Verfahren eingesetzt, wobei im folgenden der Begriff "Baumaschine" ohne Einschränkung auf einen speziellen Maschinentypus verwendet wird. Unter solchen Maschinen werden alle Geräte zur direkten - z.B. durch Planieren - oder indirekten - z.B. durch Sprengungen - Bearbeitung oder Gestaltung von Oberflächen oder Topographien verstanden. Das erfindungsgemässe Verfahren betrifft grundsätzlich die Bearbeitung oder Modifikation beliebiger Oberflächen, auch innerhalb geschlossener Räume, wie z.B. im Untertagebergbau oder im Tunnelbau. Die Modifikation von Oberflächen kann dabei durch Abtragen und Auffüllen, aber auch durch weitere geeignete Verfahren erfolgen, wie beispielsweise Sprengen, Bohren oder auch Spülverfahren. Dabei besteht der Wunsch, den als Endergebnis der Arbeitstätigkeit zu erreichenden Soll-Zustand unter Einhaltung von ökonomischen und technischen Kriterien zu erreichen.

Ein Ansatz für solche Verfahren ist die Steuerung einer Baumaschine durch Vorgabe eines Soll-Modells der zu verändernden Oberfläche, gegenüber dem kontinuierlich oder diskret eine Differenz abgeleitet wird, die als Grundlage für die Steuerbefehle dient. Ein solches Soll-Modell wird im Regelfall als Ergebnis eines CAD-Verfahrens in elektronischer Form bereitgestellt.

Kennt nun die Maschine ihren aktuellen Standort und die Differenz zwischen Soll- und Ist-Zustand an ihrer aktuellen Position bzw. dem nächstliegenden oder nachfolgenden Arbeitsbereich, so kann eine entsprechend optimierte Steuerung zur Verringerung dieser Differenz erfolgen.

Aus der US 5,631,658 ist beispielsweise eine Vorrichtung und ein Verfahren zur Steuerung einer erdbearbeitenden Maschine bekannt, bei dem 2 dreidimensionale Modelle gespeichert werden. Das erste Modell beschreibt den Soll-Zustand einer zu bearbeitenden Oberfläche, wohingegen das zweite Modell den aktuellen Ist-Zustand abbildet. Das zweite Modell wird ständig aktualisiert, indem die dreidimensionale Position der Baumaschine erfasst wird. Aus der Position der Baumaschine und/oder ihrer Werkzeuge kann auf die Topographie der bearbeiteten Oberflächegeschlossen werden. Die Steuerung der Baumaschine erfolgt durch Auswertung der Differenz zwischen erstem und zweitem Modell, wobei diese Differenz verringert werden soll.

Dieser Ansatz verwendet somit zwei grundsätzlich gleichartige Modelle zur Darstellung von Soll- und Ist-Zustand der Baustelle, zwischen denen eine bestehende Differenz verringert werden soll. Beide Modelle weisen eine zweidimensionale Anordnung von diskreten Positionen auf, denen jeweils ein vertikaler Wert als Höhe zugeordnet wird, so dass eine 1-1-Beziehung zwischen vertikaler Grösse und horizontaler Position folgt. Für das Ist-Modell erfolgt die Aufnahme durch die Bestimmung der Baumaschine selbst.

Solche Modelle weisen mehrere Nachteile auf. Zum einen muss das aktuelle Modell so ausgelegt werden, dass eine Aktualisierung dieses Modells durch eine Positionsbestimmung der Baumaschine erfolgen kann. Dies verbietet insbesondere jegliche berührungslose Messung oder die Aufnahme von deformierbaren Bereichen oder Bereichen, deren Tragfähigkeit für ein Befahren mit einer Maschine zu gering ist. Obwohl unter Umständen solche Bereiche nicht durch eine Baumaschine bearbeitet werden können, ist dennoch deren aktueller Oberflächenverlauf unter Umständen von Bedeutung, z.B. wenn ein von der Maschine zu bearbeitender Abschnitt an eine rieselfähige - und damit nicht stabile - Oberfläche angepasst werden soll.

Zudem bieten sich Schwierigkeiten mit der Bereitstellung des ursprünglichen zweiten Modells. Da das zweite Modell im Stand der Technik durch die Position der Baumaschine aktualisiert werden muss, können beispielsweise andere geodätische Informationen, wie z.B. durch scannende Vermessung, nicht ohne vorherige Transformation verwendet werden. Insbesondere kann durch die Baumaschine mit den bisherigen Verfahren kein Update solcher gescannter Informationen erfolgen.

Aus der WO 01/04576 ist ein Verfahren zur Steuerung einer erdbewegenden Maschine bekannt, bei dem der Ist-Zustand durch ein Abtasten der Oberfläche mit einem Scanner erhalten wird. Zur Steuerung der Baumaschine werden die Höhenwerte von einzelnen Punkten der so erhaltenen Punktwolke mit entsprechenden Sollwerten eines Modells des Soll-Zustands verglichen und aus der erhaltenen Differenz Steuerbefehle abgeleitet.

Dieser Ansatz verwendet eine Punktwolke zur Darstellung des Ist-Zustandes, allerdings erfolgt die Ableitung der Steuerbefehle durch die Auswahl und einen nachfolgenden Vergleich isolierter Punkte, wobei eine Zuordnung von Punkten der den Ist- und den Soll-Zustand beschreibenden Verteilung vorgenommen werden muss. Zudem erfolgt keine Aktualisierung der Punktwolke während des Bearbeitungsvorgangs.

Aus der DE 197 43 534 ist ein Verfahren zur Bestimmung der Höhe eines Punktes auf einem Arbeitsgelände bekannt, bei dem das Gelände in einem triangulären unregelmässigen Netzwerk dargestellt wird. Die Erfassung der Punkte erfolgt durch ein Positionsabfühlsystem, z.B. eine Baggerschaufel, und somit mit einer groben Auflösung. Die so erfassten Rohdaten werden zur Nutzung unter Informationsverlust in ein trianguläres Netzwerk als Geländemodell konvertiert.

In den Ansätzen des Stands der Technik ist durch die 1-1-Beziehung der Informationsgehalt des Modells bzw. der Punktwolke hinsichtlich der Nutzung reduziert, da eine Variation der Oberfläche nur mit der Auflösung der diskreten horizontalen Positionierung erfolgt. Feinere Strukturen bzw. Variationen der Höhe werden bei der Ableitung von Steuerbefehlen nicht berücksichtigt. Dies kann beispielsweise bei stark strukturierten Oberflächen, wie z.B. Gras- oder Waldlandschaft, zu grundsätzlichen Problemen führen, da jeder Position entweder die Ebene des Boden oder der Spitze des Bewuchses zugeordnet werden muss. Die jeweils andere Information geht bei einem solchen Ansatz des Stands der Technik verloren. Ebenfalls können die oft stark gezackten felsigen Oberflächen nicht erfasst werden. Somit erlaubt der Ansatz des Stands der Technik keine Nutzung von Informationen jenseits der Angabe einer Höhe, welche nur teilweise den Gegebenheiten entspricht bzw. mit einer gewissen Zufälligkeit erfasst wird.

Eine Aufgabe der vorliegenden Erfindung besteht darin, ein Verfahren bereitzustellen, welches die Nutzung von nichtdifferenzierten Informationen bezüglich des Ist-Zustandes der zu bearbeitenden Fläche erlauben, d.h. nicht in ein explizites Modell der Oberfläche oder eine entsprechende Zuordnung einzelner Punkte von Soll- und Ist-Modell umgesetzte Informationen.

Eine weitere Aufgabe der vorliegenden Erfindung liegt in der Ermöglichung einer Aktualisierung einer solchen Informations- oder Datenbasis.

Eine weitere Aufgabe der vorliegenden Erfindung liegt in der Erweiterung der Menge von nutzbaren Informationen, insbesondere über die zu bearbeitende Oberfläche.

Eine weitere Aufgabe der vorliegenden Erfindung liegt in der Nutzung von Informationen aus nicht von der Baumaschine direkt erreichbaren Bereichen.

Diese Aufgaben werden erfindungsgemäss durch Ausführungsformen mit den Merkmalen des Anspruchs 1 oder der Merkmale von Unteransprüchen gelöst bzw. diese Lösungen weitergebildet.

Die Erfindung betrifft ein Verfahren zur Steuerung einer oberflächenverändernden Baumaschine oder einer anderen Maschine zur zielorientierten Modifikation einer Oberfläche oder eines Arbeitsvolumens. Dabei erfolgt ein Verzicht auf die explizite Modellierung des Ist-Zustandes der Oberfläche, bei der jeder horizontalen Position genau eine vertikaler Grösse zugeordnet wird.

Zur Darstellung des Ist-Zustandes wird eine Punktwolke aus einer Vielzahl von Punkten verwendet, wobei diese Punkte jeweils einem Punkt auf der betrachteten Oberfläche entsprechen. Unter einer Oberfläche soll hier eine für den Arbeitsgang relevante Grenzschicht verstanden werden. Dies beinhaltet beispielsweise auch zwei oder mehr Grenzschichten übereinander. Dies kann z.B. bei einer mit Wasser bedeckten Sandfläche der Fall sein. Für den Arbeitsgang ist es von Vorteil, wenn hier sowohl der Wasserspiegel als auch die Oberfläche des Sandes bekannt sind. Ein weiteres Beispiel stellen bewachsene oder stark zerklüftete Topographien dar, bei denen es vorteilhaft sein kann, sowohl die Höhe des Bewuchses als auch die darunter liegenden Fläche zu kennen.

Erfindungsgemäss erfolgt nun nicht eine Zuordnung von jeweils einzelnen Punkten aus der Darstellung des Ist- und des Soll-Zustandes, sondern es wird eine Position des Soll-Modells mit einer Mehrzahl von Punkten des Ist-Zustandes verknüpft, wobei die Auswahl der zu verknüpfenden Punkte variiert werden kann.

Die Bereitstellung einer den Ist-Zustand beschreibenden Punktwolke erfolgt beispielsweise durch einen luft- oder erdgestützten Abtastvorgang, wie auch in der WO 01/04576 für den Fall der erdgestützten Aufnahme beschrieben. Hierfür stehen insbesondere scannende entfernungsmessende Systeme, wie z.B. LIDAR-(Light Detecting and Ranging)-Systeme zur Verfügung. Durch diese Systeme wird eine Punktwolke aus Entfernungsmessungen zu den einzelnen Oberflächenpunkten generiert. So wird beispielsweise in der WO 97/40342 ein erdgestütztes Verfahren beschrieben, welches durch ortsfest aufgestellte Scannersysteme eine Topographie aufnimmt. Für diese Systeme wird ein fixer Aufstellungspunkt gewählt, der als Basis eines durch Motoren bewirkten Scanvorgangs dient. Die dreidimensionale Ortsinformation des jeweiligen Oberflächenpunktes ist über die Entfernung zum gemessenen Punkt, die Winkelstellung im Zeitpunkt der Messung und den bekannten Standort der scannenden Vorrichtung ableitbar.

Obwohl aus einer Punktwolke, wie ebenfalls in der WO 97/40342 beschrieben, ein dreidimensionales Modell abgeleitet werden kann, führt dies jedoch zu einem zeitlichen Aufwand bei gleichzeitigem Informationsverlust. So wird beispielsweise im Rahmen einer Modellbildung durch die Zuordnung des jeweils nächstgelegenen Oberflächenpunktes zu einem räumlichen Punkt, der zur Steuerung der Maschine verwendet wird, auf einen Teil der Information verzichtet - in diesem Beispiel auf den Abstand zwischen Oberflächenpunkt und räumlichen Punkt.

Eine Aktualisierung der Punktwolke ist durch einen Scanvorgang, der z.B. in Hinblick auf die Position des Scanners fahrzeuggestützt sein kann, möglich. Dabei kann entweder der komplette Bereich neu gescannt oder aber nur Teilbereiche aufgenommen werden. Das Einpassen der Teilbereiche kann z.B. unter Verwendung von Verfahren der Bildverarbeitung bzw. der Mustererkennung oder durch Vermessung des Fixpunktes des Scanners erfolgen. Hierdurch wird es möglich, die Aktualisierung ohne den Zwischenschritt einer Modellbildung - insbesondere im Sinne einer 1-1-Zuordnung von horizontaler Position zu Höhe - durchzuführen, so dass der volle Informationsgehalt der Punktwolke erhalten bleibt. Zudem reduziert der Verzicht auf den Schritt der Modellbildung die benötigte Rechenzeit.

Zum Ableiten von Steuerbefehlen erfolgt im erfindungsgemässen Verfahren ein Vergleich zwischen Soll-Zustand und der Punktwolke, wobei der Soll-Zustand grundsätzlich auch als Punktwolke dargestellt werden kann, im Regelfall aber als dreidimensionales Modell vorliegen wird. Die Bearbeitung der Oberfläche erfolgt mit einer Granularität der Arbeitsschritte, denen hier rein exemplarisch diskrete horizontale Positionen zugeordnet sind, wobei die Auflösung fix oder aber auch variabel gestaltet sein kann. Beispielsweise kann in flachen Zonen ein gröberes Raster gewählt werden, wohingegen im Bereich von steilen Anstiegen eine feinere Auflösung der horizontalen Positionen vorteilhaft ist. Ebenso kann statt der diskreten horizontalen Position zur Festlegung der Steuerbefehle auch eine vertikale Position - z.B. im Tunnelbau - genutzt werden oder auch eine kontinuierliche bzw.- pseudo-kontinuierliche Steuerung erfolgen.

Für jede genutzte räumliche bzw. horizontale Position erfolgt ein Vergleich zwischen Soll- und Ist-Zustand. Dabei werden jeweils Oberflächenpunkte aus der Punktwolke einer horizontalen Position zugeordnet. Im einfachsten Fall werden einige der räumlich nächstliegende Punkte gewählt und deren Positionsinformation unter Aggregierung übernommen. Würde diese Zuordnung für jede horizontale Position durchgeführt und gespeichert, so ergäbe sich als gespeichertes Ergebnis ein dreidimensionales Modell des Ist-Zustandes.

Im erfindungsgemässen Ansatz werden jedoch vorteilhafterweise mehrere Oberflächenpunkte aus der Punktwolke einer Position zugeordnet, ohne dass ein Informationsverlust durch den Zwischenschritt einer Modellbildung auftritt. Die Mehrzahl der Punkte erlaubt eine Ableitung verschiedener Informationen für die betrachtete Position. Eine Möglichkeit besteht in der Berechnung von Aggregaten, z.B. vermittels einer Gewichtsfunktion. So können beispielsweise die Positionswerte mehrerer Oberflächenpunkte je nach Abstand von der horizontalen Position eines zur Auslösung eines Steuerbefehls genutzten Gitterpunktes gewichtet und aufsummiert werden, so dass die Höheninformation eine Mittelung über mehrere Werte darstellt. Die 1-1-Zuordnung des Stands der Technik ist im Vergleich zum erfindungsgemässen Verfahren grundsätzlich fehlerbehaftet oder unvollständig, da der jeweils für jede Position aufgenommene Wert auch ein Extremwert sein kann, ohne dass hierfür eine entsprechende Information zur Verfügung steht, aufgrund derer eine Bewertung und allenfalls eine Korrektur erfolgen kann.

Eine weitere Möglichkeit der Nutzung mehrer Punkte besteht in der Generierung von Geraden oder Ebenen, z.B. mit der Methode der kleinsten Fehlerquadrate. Im Gegensatz zu Verfahren des Stands der Technik können so auch lokale Steigungen oder auch höhere Ableitungen für eine betrachtete Position erhalten werden. Zur erfindungsgemäss möglichen Nutzung der Information mehrerer Punkte stehen eine Vielzahl von an sich bekannten Verfahren aus dem Bereich der Optimierung, Mustererkennung oder Bildverarbeitung zur Verfügung. So können Ebenen auch mit Hilfe der Theorie der unscharfen Mengen (Fuzzy Logics), der neuronalen Netze oder heuristischen Ansätzen bestimmt werden. Beispielsweise kann durch Mustererkennung mit neuronalen Netzen eine Oberflächenform in der Punktwolke erkannt werden, deren Bearbeitungsplan mittels heuristischer Verfahren bestimmt wird. In diese heuristischen Verfahren können beispielsweise Informationen über die Boden- oder Materialbeschaffenheit, Wassergehalt oder die Oberflächenrauhigkeit einfliessen. Die Steueranweisungen für die Maschine erfolgen somit nicht mehr auf der Basis eines lokalen Vergleichs zwischen SollHöhe und Ist-Höhe sondern unter Nutzung der vollen Information einer gescannten Oberfläche, wobei gerade auch intelligente Verfahren zum Einsatz kommen können, die auf eine Modellbildung verzichten. Die durch die Steueranweisungen bewirkten Vorgänge betreffen hierbei allgemein die Veränderungen von Oberflächen mit beliebiger Orientierung. Insbesondere betrifft dies das Planieren von Geländeteilen, Ausheben von Gruben, Gestalten von Böschungen, andere Beispiele stellen aber auch maschinengestützte Sprengungen dar, wie sie z.B. im Tage- oder Untertagebau verwendet werden. Die Steueranweisungen können direkt elektronisch oder mechanisch umgesetzt werden, aber auch beispielsweise zur Interaktion mit dem Benutzer führen. So beinhaltet eine erfindungsgemässe Steueranweisung beispielsweise auch die visuelle Projektion der Lage von Sprenglöchern, die nachfolgend gebohrt werden.

Die Zuordnung von Oberflächenpunkten zum Spezialfall von horizontalen Positionen kann eine separierende Aufteilung der Punktwolke oder aber auch einen überlappende und damit gemeinsame Nutzung von Punkten für mehrere Positionen beinhalten. So kann beispielsweise eine Glättung der Oberfläche erreicht werden, wenn die jeder Position zugeordnete Zahl von Oberflächenpunkten den Mittelwert der jeder Position zuordenbaren Oberflächenpunkte übersteigt. Für jede Position wird nun die Information der Punkte benachbarter Positionen genutzt.

Auch besteht für eine Position die Option, aus der Höhenstreuung von Punkten eine Mehrzahl von möglichen Höhenniveaus ableiten zu können. So kann aus der Streuung von gemessenen Oberflächenpunkten eine Differenzierung von Bewuchs und Erdboden oder Gewässeroberfläche und Gewässergrund bestimmt werden.

Eine weitere Möglichkeit besteht in der zeitliche Interpretation der Höhenstreuung. So können Höhenunterschiede auch durch Bewegungen desselben Objektes innerhalb der Zeitspanne eines Scanvorgangs oder zwischen zwei aufeinanderfolgen Scanvorgängen resultieren. Somit können aus der Höhenstreuung Rückschlüsse auf die Oberfläche gezogen werden.

Hierbei können auch Zusatzinformationen der Punktwolke genutzt werden, wenn beispielsweise die Punktwolke aus unterscheidbaren Teilmengen von Oberflächenpunkten zusammengesetzt ist. Dies ist insbesondere der Fall wenn den jeweiligen Teilmengen eine charakterisierende Grösse zugeordnet ist, wobei diese z.B. in einem unterschiedlichen Spektralbereich der Aufnahme besteht. So können zwei Messungen in unterschiedlichen Spektralbereichen beim Abspeichern gekennzeichnet werden. Anhand des unterschiedlichen Reflexionsverhaltens von Objekten kann nun eine einfachere Zuordnung, z.B. zu einer von mehreren möglichen Ebenen, erfolgen. Auch kann eine zeitliche Differenzierung vorteilhaft sein, wenn beispielsweise kurz hintereinander die gleiche Topographie aufgenommen und unter Kennzeichnung des Aufnahmezeitpunktes in einer gemeinsamen Punktwolke integriert abgespeichert wird. Anhand der Zeitmarke können nun für jede Position die Teilmengen separiert werden, was beispielsweise die Identifikation und Zuordnung zu bewegten Elementen erleichtert. Diese können z.B. durch den Wind bewegte Blätter oder Flüssigkeitsoberflächen sein, so dass beispielsweise eine Trennung von Erdoberfläche und Bewuchs anhand der zeitlichen Signatur erleichtert wird.

Die Höhenstreuung kann auch gezielt zur Feinsteuerung des Bearbeitungsvorgangs genutzt werden. So kann für einen Haufen aus rieselfähigem Material eine Schnittkante abgeleitet werden, deren Höhe ein gleichzeitiges Abtragen von Erhöhungen und Befüllen von Vertiefungen ermöglicht.

Erfindungsgemäss ist die Nutzung eines der Ansätze nicht automatisch auf den gesamten zu bearbeitenden Bereich anzuwenden. Vielmehr kann für einzelne Zonen oder auch einzelne Positionen ein jeweils variierender Ansatz erfolgen. So kann beispielsweise in flachen Zonen auf eine Bestimmung von Steigungen an den jeweiligen Positionen verzichtet werden, wohingegen in stark ansteigenden oder variierenden Zonen stets für jede Position die Steigung oder auch deren Ableitung berechnet wird.

Das erfindungsgemässe Verfahren ist auch für nichtkontinuierliche Prozesse der Oberflächenmodifikation einsetzbar. Solche bestehen aus zeitlich getrennten oder versetzten Arbeitsschritten, wie z.B. in den Abfolgen Abgraben - Messen - Vergleichen oder Bohren - Sprengen - Messen - Vergleichen.

Die Aufnahme einer Punktwolke ist mit scannenden Verfahren durch verschiedene Systeme möglich. Zumeist werden Laserscanner verwendet, die erd- oder luftgestützt eingesetzt werden. Bei einem erdgestützten System erfolgt die Aufnahme von einer oder mehreren fixen Positionen aus. Diese Positionen können bekannt oder unbekannt sein. Bei einem luftgestützten System verändert sich die Position fortlaufend, wobei jedoch die gescannten Oberflächenpunkte fortlaufend mit Punkten einer bekannten dreidimensionalen Position verknüpft werden. So ist in beiden Fällen zumindest ein Referenzpunkt mit bekannter Absolutposition vorhanden, bezüglich dessen eine Bezugnahme für alle gemessenen Oberflächenpunkte und damit deren räumliche Zuordnung möglich ist. Somit ist die räumliche Ordnung innerhalb der Punktwolke bestimmt.

In einer Punktwolke ist die Zahl der so aufgenommenen Oberflächenpunkte grösser als die Zahl der Positionen aus denen Steuerbefehle abgeleitet werden, wobei die Verteilung der Oberflächenpunkte aufgrund des Aufnahmevorgangs bezüglich der Positionen nicht homogen ist. Je nach den geometrischen Bedingungen des Scanvorganges schwanken die Dichten der Oberflächenpunkte und können in Teilbereichen, z.B. in gegenüber dem scannenden System abgeschatteten Regionen, auch geringer als die Zahl der räumlichen Positionen sein. Im Mittel ist die Zahl der Oberflächenpunkte zumeist sehr viel grösser als die Zahl der benötigten bzw. vorgegebenen räumlichen Positionen.

Um eine Aktualisierung des bearbeiteten Bereichs zu erhalten, kann beispielsweise ein periodischer oder ereignisgesteuerter Abtastvorgang durch einen günstig placierten Scanner erfolgen, wodurch die von beispielsweise mehreren Baumaschinen gemeinsam genutzte Datenbasis aktualisiert wird. Alternativ oder ergänzend kann auch ein Scanner, z.B. ein Zeilenscanner, auf der Baumaschine selbst angebracht werden, so dass der jeweils bearbeitete Abschnitt von der Maschine selbst erfasst wird. Die Verwendung einer Punktwolke bietet nun die Möglichkeit, den jeweils erfassten Bereich mittels Verfahren der Mustererkennung in die gesamte Punktwolke einzupassen. So können deutlich identifizierbare Strukturen, wie z.B. Strassenränder, Böschungen, Leitungen, Gleise etc., vorteilhaft als Referenzstrukturen verwendet werden. Im Gegensatz zur Verwendung eines Modells muss nun nicht die absolute Lage bzw. Position eines Oberflächenpunktes bestimmt werden. Das Ensemble von aufgenommenen Oberflächenpunkten wird als Ganzes in die Punktwolke eingepasst. Um eventuell entstehende Inkonsistenzen zu verringern oder zu eliminieren, kann periodisch ein vollständiger Scanvorgang für die gesamte Baustelle bzw. Oberfläche durchgeführt werden.

Das erfindungsgemässe Verfahren erlaubt hierbei die Verwendung von Daten und deren Aktualisierung ohne Einschränkung auf durch die Maschine direkt bearbeitbare oder befahrbare Oberflächen. Da eine Aktualisierung nicht der Positionierung der Baumaschine auf dem jeweiligen zu erfassenden Punkt bedarf, können auch ausserhalb des befahrbaren Bereichs gelegene Strukturen oder Oberflächen genutzt und aktualisiert werden.

Das erfindungsgemässe Verfahren wird nachfolgend anhand von in der Zeichnung schematisch dargestellten Ausführungsbeispielen rein beispielhaft näher beschrieben. Im einzelnen zeigen
- Fig.1: die Darstellung eines Modells zur Abbildung des Ist-Zustands nach dem Stand der Technik;
- Fig.2: die Darstellung der Ableitung von Steuerbefehlen nach dem Stand der Technik;
- Fig.3: die Darstellung eines Verfahrens zur Oberflächenbearbeitung nach dem Stand der Technik;
- Fig.4a-d: die Darstellung der unterschiedlichen Repräsentationen von Ist- und Soll-Zustand;
- Fig.5: die schematische Darstellung der Ableitung von Informationen aus mehreren zugeordneten Oberflächenpunkten für ein erfindungsgemässes Verfahren;
- Fig.6: die schematische Darstellung der variablen Zuordnung von Oberflächenpunkten für ein erfindungsgemässes Verfahren;
- Fig.7: die schematische Darstellung der Ableitung von Steuerbefehlen für ein erfindungsgemässes Verfahren;
- Fig.8: die schematische Darstellung der Ableitung von unterschiedlichen Ebenen aus der Höhenstreuung von mehreren zugeordneten Oberflächenpunkten für ein erfindungsgemässes Verfahren;
- Fig.9: die Darstellung eines Beispiels für eine luftgestützt aufgenommene Punktwolke;
- Fig.10: die Darstellung eines ersten Beispiels für eine erdgestützt aufgenommene Punktwolke;
- Fig.11: die Identifizierbarkeit von Strukturen in einem zweiten Beispiel für eine erdgestützt aufgenommene Punktwolke und
- Fig.12: die Darstellung von verschiedenen Systemen zur Aufnahme von erfindungsgemäss verwendbaren Punktwolken.

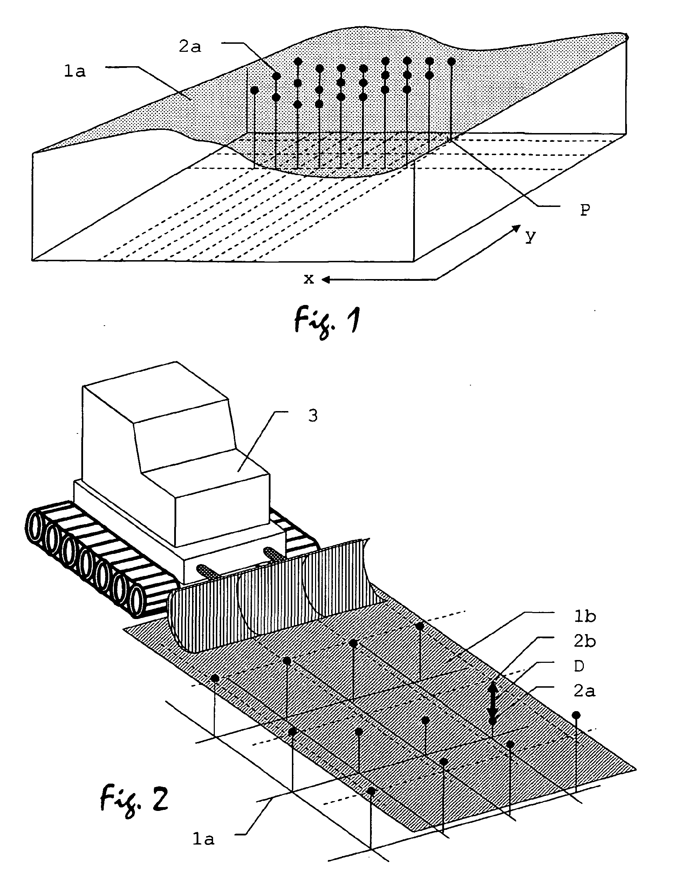

In Fig.1 wird ein Modell zur Abbildung des Ist-Zustands 1a nach dem Stand der Technik dargestellt. Die Oberfläche eines zu bearbeitenden Geländes wird im Ist-Zustand 1a durch ein Modell aus einer Vielzahl von ersten Punkten 2a beschrieben, die jeweils eine Höheninformation beinhalten und einer horizontalen Position P zugeordnet sind. Somit erfolgt eine Repräsentation der Oberfläche im Ist-Zustand 1a durch ein Gitter von Höheninformationen, wobei für jeden Gitterpunkt ein Höhenwert angegeben wird. In analoger Weise kann auch der Soll-Zustand als Modell dargestellt werden.

Fig.2 erläutert die Ableitung von Steuerbefehlen nach einem Verfahren des Stands der Technik. In diesem Beispiel wird eine Baumaschine 3 eingesetzt, um einen Geländeteil einzuebnen. Der Soll-Zustand 1b stellt somit eine - hier schraffiert dargestellte - Ebene dar, die durch Gitterknoten als zweite Punkte 2b beschrieben wird. Der Ist-Zustand 1a wird durch erste gitterförmig angeordnete erste Punkte 2a beschrieben, wobei die Gitter der horizontalen Positionen von Ist-Zustand 1a und Soll-Zustand 2a deckungsgleich sind. Der lokale Steuerbefehl für die Baumaschine 3 wird aus der Differenz D von erstem Punkt 2a und zweitem Punkt 2b abgeleitet. Im hier betrachteten Beispiel folgt aus dieser Differenz D, dass an der zugeordneten Position die Auffüllung einer Vertiefung stattfinden muss.

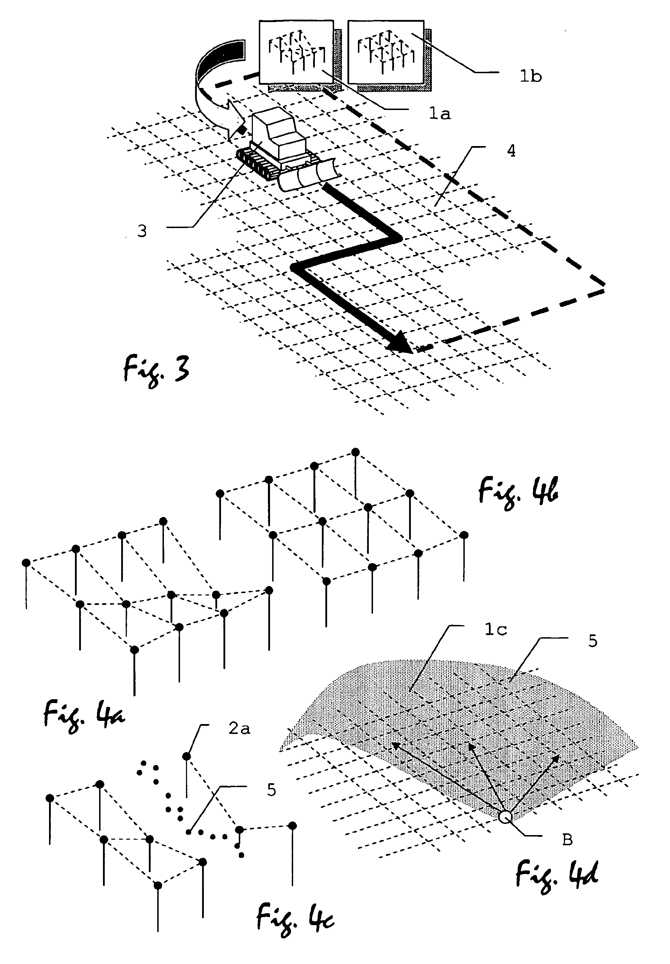

Der Gesamtablauf eines Verfahrens zur Oberflächenbearbeitung nach dem Stand der Technik wird in Fig.3 schematisch erläutert. Die Baumaschine 3 fährt in mehreren Durchläufen über die zu bearbeitende Oberfläche 4 wobei diese anhand der Modelle von Ist-Zustand 1a und Soll-Zustand 1b bearbeitet wird. Beim Betrieb der Baumaschine 3. wird kontinuierlich deren Position bestimmt und zur Aktualisierung des Modells des Ist-Zustandes 1a genutzt. Ein Rechner vergleicht beide Modelle und generiert anhand der Differenzen die Steuerbefehle. Eine Aktualisierung bedarf somit der Positionierung der Baumaschine 3 auf dem zu aktualisierenden Punkt. Nach einer gewissen Anzahl von Durchläufen bzw. Bearbeitungszyklen ist die Differenz der Modelle von Ist-Zustand 1a und Soll-Zustand 1b entweder verschwunden oder unterhalb eine vorgegebene Schwelle gesunken, so dass der Arbeitsgang als abgeschlossen betrachtet werden kann. Bei solchen Verfahren können beispielsweise keine Ist-Informationen von nicht befahrbaren oder nicht befahrenen Bereichen zur Steuerung der Baumaschine 3 verwendet werden.

Die Fig.4a-d zeigen die Darstellung der unterschiedlichen Repräsentationen von Ist- und Soll-Zustand. In Fig.4a wird ein Modell des Ist-Zustandes aus gitterförmig angeordneten Höheninformationen dargestellt, dem ein in Fig.4b dargestelltes Modell des Soll-Zustandes mit gleichem Aufbau zugeordnet ist. Für jeden Punkt des zugrundeliegenden Gitters besteht eine Vergleichsmöglichkeit, so dass aus einer auftretenden Differenz ein Steuerbefehl abgeleitet werden kann. In Fig.4c wird schematisch die Ersetzung von ersten Punkten 2a durch eine Vielzahl von Oberflächenpunkten 5 visualisiert, wobei die Oberflächenpunkte 5 z.B. durch einen optischen Abtastvorgang, wie z.B. LIDAR oder auch photogrammetrische Verfahren, gewonnen werden können. Wird nun die gesamte zu repräsentierende Oberfläche durch solche Oberflächenpunkte 5 ersetzt, so folgt die in Fig.4d schematisch dargestellte Punktwolke 1c. In Verfahren des Stands der Technik werden einzelne Oberflächenpunkte 5 mit einzelnen Punkten des Soll-Modells verglichen und aus der Höhendifferenz Sterbefehle abgeleitet. Erfindungsgemäss sind die einzelnen Oberflächenpunkte 5 nicht explizit den einzelnen Gitterpositionen zugeordnet, die zur Ableitung der Steuerbefehle dienen, sondern besitzen eine räumliche Anordnungsbeziehung, die beispielsweise durch den Fixpunkt B des Scanvorgangs gegeben ist. Für jeden Oberflächenpunkt 5 ist in diesem Beispiel der Horizontal- und Vertikalwinkel sowie die Entfernung zum Fixpunkt B bekannt, so dass bei Kenntnis der Absolutposition des Fixpunktes B auch die jeweilige Position des Oberflächenpunkt 5 bestimmbar ist. Für jeden Gitterpunkt kann nun erfindungsgemäss eine Teilmenge der Punktwolke 1c herangezogen werden, um Informationen zur Ableitung von Steuerbefehlen zu erhalten. Im Gegensatz zu den Modellen der Fig.4a und Fig.4b ist der Informationsgehalt der Punktwolke 1c nicht durch eine Modellbildung reduziert, so dass der Ist-Zustand hinsichtlich der horizontalen Position zwar diskret auf der Basis eines Gitters beschrieben wird, wobei aber jeder horizontalen Position eine Zahl von Oberflächenpunkten zugeordnet ist, welche im Mittel über alle horizontalen Positionen grösser als 1 sein kann bzw. im Regelfall grösser als 1 sein wird.

Die erfindungsgemäss verwendbaren Modelle und Koordinatensysteme sind nicht auf kartesische Darstellungen beschränkt. Vielmehr können grundsätzlich alle geeigneten Darstellungen verwendet werden, wobei das gewählte Koordinatensystem häufig von der Geometrie der zu bearbeitenden Oberfläche abhängen wird. So bieten sich beispielsweise für den Tunnelbau Darstellungen in polaren Koordinaten an.

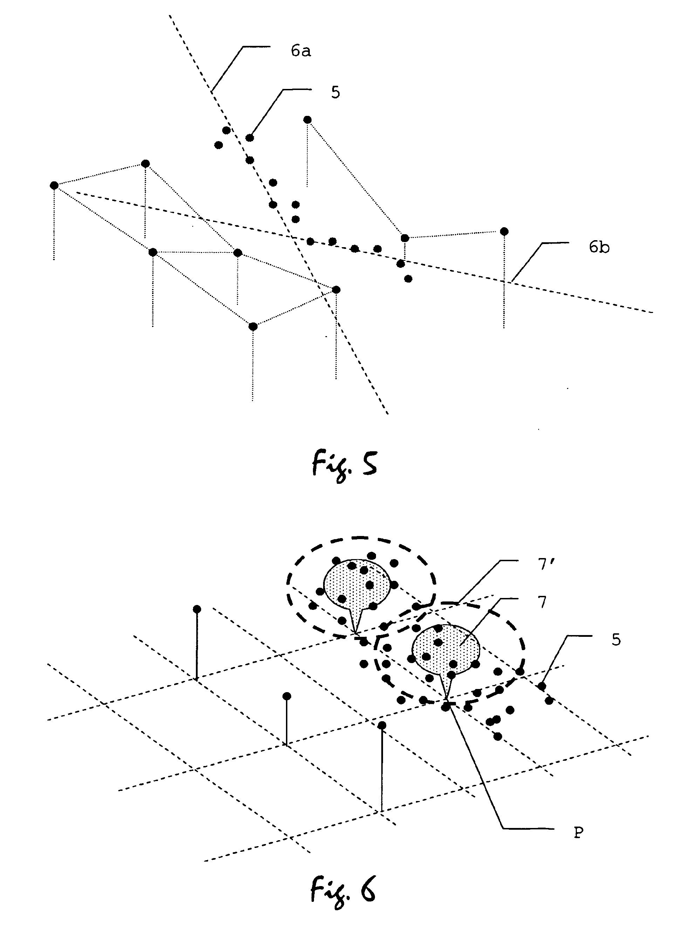

In Fig.5 erfolgt eine schematische Darstellung der Ableitung von Informationen aus mehreren zugeordneten Oberflächenpunkten 5 für ein erfindungsgemässes Verfahren, wobei aus reinen Anschaulichkeitsgründen auch Punkte eines Modells des Stands der Technik dargestellt werden. Um eine Vertiefung oder Überhöhung in einer zu bearbeitenden Oberfläche aufzufüllen bzw. abzutragen, wird in Modellen des Stands der Technik lediglich die Höhendifferenz zwischen Soll- und Ist-Zustand und ggf. auch gegenüber benachbarten Gitterpunkten betrachtet, wobei jeweils ein Vergleich der räumlichen Differenz - in diesem Fall Höhendifferenz - zwischen einzelnen Punkten erfolgt. In einem erfindungsgemässen Verfahren kann durch die Vielzahl von Oberflächenpunkten 5 eine Kurve oder Fläche gelegt werden, die eine bessere Annäherung an die Oberfläche und damit eine optimierte Ableitung von Veränderungsinformationen ermöglicht, aus denen Steuerbefehle generiert werden können. Solche Flächen oder Kurven können mit einer Vielzahl bekannter Verfahren abgeleitet werden und insbesondere auch die Berücksichtigung von Ableitungen beinhalten. In Fig.5 wird rein exemplarisch das Einfügen einer ersten Geraden 6a und einer zweiten Geraden 6b in die Oberflächenpunkte 5 einer Teilmenge einer Punktwolke dargestellt. Diese Erzeugung einer Kurve bzw. Geraden kann beispielsweise mit dem Verfahren der kleinsten Fehlerquadrate erfolgen, wobei weitere geeignete Verfahren beispielsweise auch die Methode der unscharfen Mengen (Fuzzy Logics), Verfahren der Bildverarbeitung oder Mustererkennung sowie verschiedene Heuristiken sind.

Ein relevanter Schritt bei diesem Ansatz ist zumeist die Auswahl der in Frage kommenden Oberflächenpunkte 5, die nach einem einfachen Auswahlverfahren, z.B. die Berücksichtigung bezüglich einer horizontalen Position nächstgelegenen Oberflächenpunkte 5, oder aber durch eine Mustererkennung erfolgen kann. Hierbei werden beispielsweise alle Oberflächenpunkte 5, die zu einer erkannten Struktur gehören, zur Ableitung von Flächen berücksichtigt. In Fig.6 erfolgt hingegen die schematische Darstellung der variablen Zuordnung von Oberflächenpunkten für ein erfindungsgemässes Verfahren. Jeder Position P des zugrundeliegenden Gitters von horizontalen Positionen werden alle Oberflächenpunkte 5 zugeordnet, welche innerhalb eines vorgegebenen Radius von der Position gelegen sind. Somit erfasst der relevante Einbeziehungsbereich 7 eine Teilmenge der Punktwolke. Beispielsweise können die so einbezogenen und damit der horizontalen Position zugeordneten Oberflächenpunkte 5, insbesondere durch die Verwendung einer Gewichtsfunktion, aggregiert werden, so dass der Position z.B. ein Mittelwert zugeordnet wird. Dabei kann der Einbeziehungsbereich 7 so gewählt sein, dass die Summe aller Teilmengen kleiner als die gesamte Punktwolke ist. Alternativ können aber auch grössere Erfassungsbereiche 7' gewählt werden, die einen Überlapp mit benachbarten Positionen P bedingen, so dass einige Oberflächenpunkte 5 in mehreren Teilmengen gleichzeitig beinhaltet sind. Damit werden für jede horizontale Position des Soll-Zustands Oberflächenpunkte von wenigstens zwei horizontalen Positionen des Ist-Zustandes berücksichtigt. Die Menge der pro Position zu berücksichtigenden Oberflächenpunkte 5 kann insbesondere auch variabel und von der jeweiligen Oberflächenstruktur abhängig gestaltet werden.

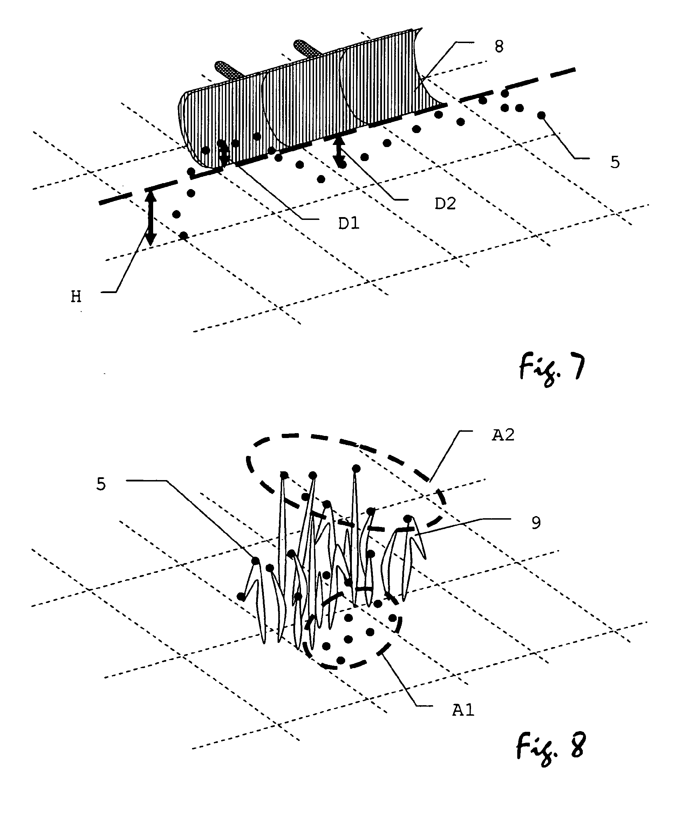

Fig.7 zeigt die schematische Darstellung der Ableitung von Steuerbefehlen für ein erfindungsgemässes Verfahren, wobei in diesem Beispiel aus dem Tiefbau eine Anhäufung von rieselfähigem Material betrachtet wird, welche im Querschnitt durch eine Spur von Oberflächenpunkten 5 repräsentiert wird. Die Vielzahl der Oberflächenpunkte 5 einer Punktwolke erlaubt einen gegenüber den Verfahren des Stands der Technik höher aufgelösten Verlauf der Oberfläche, welche zudem bei diesem Typus von deformierbarer Oberfläche grundsätzlich nicht von der Baumaschine ohne Deformation befahren und damit nicht erfasst werden kann. Ausserdem kann bei einem erfindungsgemässen Verfahren aus der Höhenstreuung der Oberflächenpunkte 5 die Granularität des Materials und damit die erzielbare Abtragung von Höhen D1 und Verfüllung von Vertiefungen D2 abgeleitet werden. Das auf der Baumaschine implementierte System kann nun aus der Punktwolke bzw. der Spur eine optimierte Höhe H der Schnittkante für einen zur Bearbeitung der Oberfläche verwendeten Schild 8 ableiten, so dass im Vergleich zu Verfahren des Stands der Technik die Zahl der benötigten Bearbeitungsdurchläufe verringert wird.

Eine weiteres Beispiel der Nutzung des nicht reduzierten Informationsgehaltes der Punktwolke zeigt Fig.8 mit einer schematische Darstellung der Ableitung von unterschiedlichen Ebenen aus der Höhenstreuung von mehreren zugeordneten Oberflächenpunkten 5. Ist eine zu bearbeitende oder bei der Bearbeitung zu berücksichtigende Fläche mit Pflanzen 9 bewachsen, so liefert ein Abtastvorgang zumeist eine Menge von Oberflächenpunkten 5, welche sowohl Reflexionen vom Boden als auch von den Pflanzen 9, insbesondere von deren Spitzen, herrühren. Aus den Oberflächenpunkten 5 einer Punktwolke können beispielsweise zwei Teilmengen ausgewählt werden, wobei eine erste Teilmenge A1 Messungen zum Boden und eine Teilmenge A2 Messungen zu den Spitzen der Pflanzen 9 beinhaltet. Aus den beiden Teilmengen können dann Boden oder Bewuchsobergrenze abgeleitet werden. Durch diesen Ansatz kann beispielsweise der Boden eines bewachsenen und nicht zugänglichen Bereichs erhalten werden, an den eine Angleichung im Niveau oder der Neigung erfolgen soll. Die Steuerbefehle für die Baumaschine werden somit anhand der Kenntnis des Bodenverlaufs eines bewachsenen Bereichs abgeleitet. Neben der Separation von Oberflächenpunkten anhand der Höhenstreuung bzw. der Höhenwerte kann bereits bei der Aufnahme der Punktwolke eine zusätzliche charakterisierende Grösse eingeführt werden, so dass anhand dieser Grösse eine Separation der Punktwolke in Teilmengen möglich wird. Beispiele hierfür stellen zu unterschiedlichen Zeitpunkten oder in unterschiedlichen Spektralbereichen aufgenommene Abtastungen bzw. Scanvorgänge dar, bei denen Zeitpunkt oder Spektralbereich als charakterisierende Grössen dienen. So können nachfolgend beispielsweise Pflanzen zuzuordnende Oberflächenpunkte 5 aufgrund ihres gegenüber dem Boden spektral unterschiedlichen Verhaltens getrennt werden. Jeder Oberflächenpunkt 5 kann durch Verwendung dieser charakterisierenden Grösse zusätzlich attributiert werden.

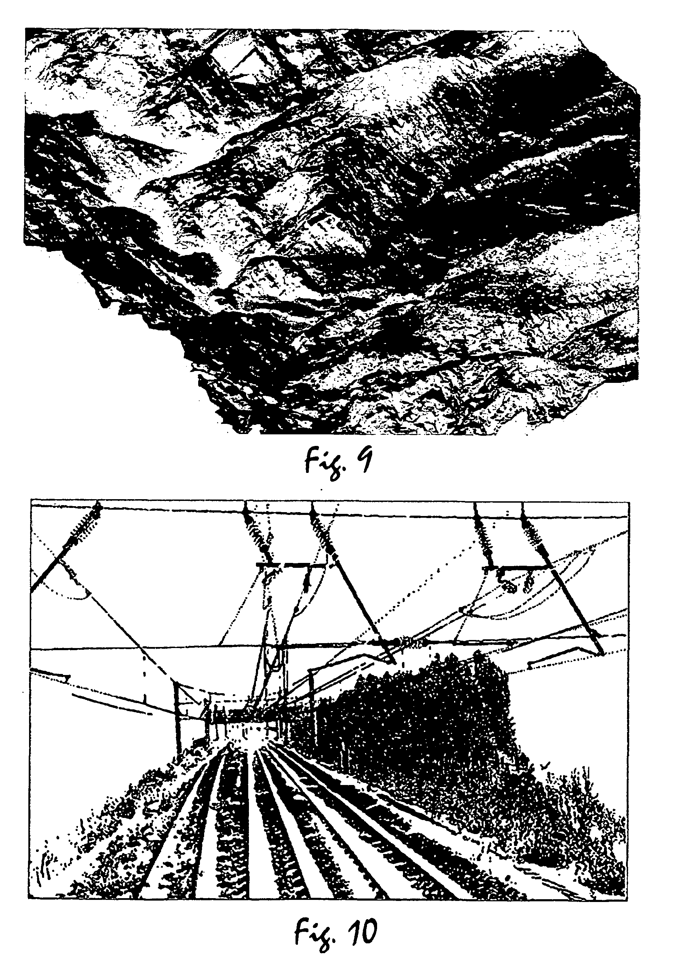

Fig.9 zeigt die Darstellung eines Beispiels für eine luftgestützt aufgenommene Punktwolke. Hierfür wird mit einem Luftfahrzeug eine zu bearbeitende Oberfläche überflogen und mittels LIDAR gescannt. Die so aufgenommene Punktwolke kann dann als Ausgangs-Ist-Zustand verwendet werden. Die nachfolgenden Aktualisierungen können entweder durch erneute Flüge oder aber durch bearbeitende oder unterstützende Geräte am Boden erfolgen. Die auf diese Weise bodengestützt erhaltenen Aktualisierungen werden zumeist nur Ausschnitte der Punktwolke betreffen, so dass eine Einpassung in die Gesamt-Punktwolke notwendig ist. Eine solche Einpassung kann beispielsweise über Mustererkennung oder aber auch direkt unter Kenntnis der Absolutposition oder der Relativposition jedes Oberflächenpunktes bezüglich eines Bezugspunktes erfolgen.

In Fig.10 erfolgt die Darstellung eines ersten Beispiels für eine erdgestützt aufgenommene Punktwolke. Die Ansicht erfasst eine Gleisanlage mit mehreren Schienen und zugehörigen Oberleitungen. Im rechten Bereich ist starker Bewuchs zu erkennen. Aufgrund der Gegebenheiten wäre mit Verfahren des Stands der Technik eine Erfassung des Bodens unter den Gleisen oder unter dem Bewuchs nicht möglich, da die Baumaschine nicht direkt auf dem Boden unter den Gleisen oder dem Bewuchs positioniert werden kann. Zudem verbietet sich häufig, z.B. aus Sicherheitsgründen, die direkte und ständige Kontaktaufnahme mit dem Untergrund.

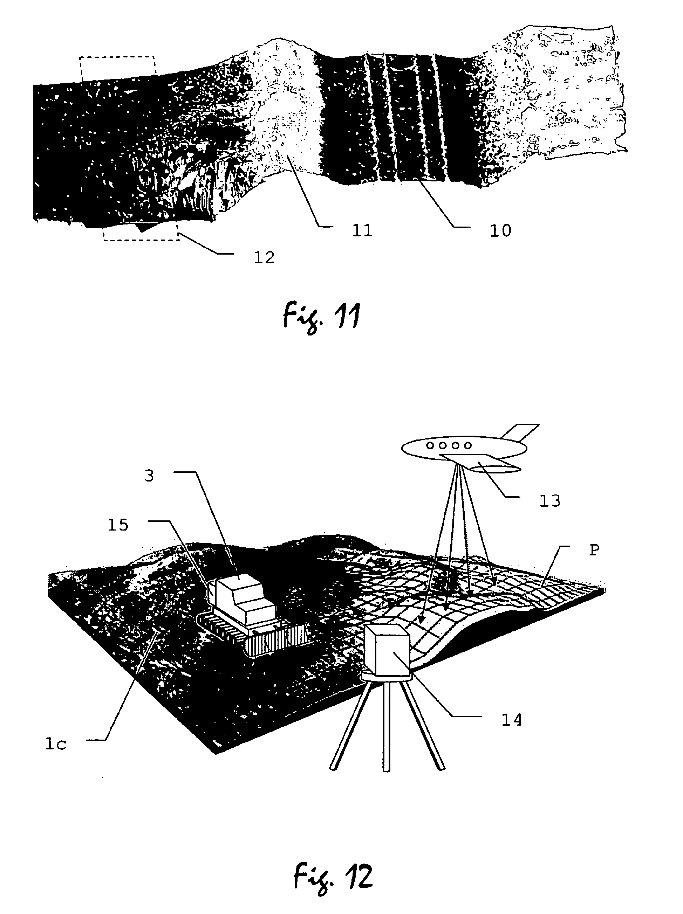

Fig.11 erläutert die Identifizierbarkeit von Strukturen und die Ableitung von Steuerbefehlen in einem zweiten Beispiel für eine luftgestützt aufgenommene Punktwolke. Dargestellt wird eine Schienstrecke mit einer Sohle 10 und einer links angrenzenden Böschung 11, der ein leicht abfallendes, strukturiertes Gelände folgt. In diesem Beispiel soll parallel zur Schienenstrecke ein Fahrweg 12 angelegt werden, wobei sich dieser in seinem Höhenverlauf an der Sohle 10 orientieren soll. Bezüglich des höchsten Punkts der - teilweise bewachsenen - Böschung 11 muss ein seitlicher Mindestabstand eingehalten werden und der Übergang vom Fahrweg zur Böschung 11 soll in seiner Steigung kontinuierlich angepasst werden. Dabei wird die Böschung 11 zeitgleich zur Anlage des Fahrwegs 12 an einigen Stellen neu aufgeschüttet bzw. ausgebessert. Ein Befahren der Gleisanlage und der Böschung 11 kann aus Sicherheitsgründen nicht erfolgen.

Im Gegensatz zu Verfahren des Stands der Technik kann anhand der aufgenommenen und auch in nicht befahrbaren Bereichen aktualisierbaren Punktwolke die Ableitung von Steuerbefehlen erfolgen, welche die Einhaltung dieser Nebenbedingungen ermöglichen. So kann beispielsweise die Sohle 10 der Gleisanlage bestimmt werden, in dem zuerst anhand einer Mustererkennung alle Oberflächenpunkte von der Berücksichtigung ausgeschlossen werden, die den Gleisen zugeordnet werden können. Durch die verbleibende Teilmenge der Punktwolke können dann entsprechende Ebenen gelegt werden, welche die Sohle 10 approximieren.

Erfindungsgemäss können die verschiedenen Ansätze zu Separation von Teilmengen aus der Punktwolke miteinander kombiniert werden, insbesondere auch unter Wiederholung einzelner Schritte. So können in Fig.11 die Gleise auch anhand ihres durch das vom Metall bedingte spektrale Reflexionsverhalten separiert werden oder es werden alle Oberflächenpunkte bei der Ableitung der Sohle 10 nicht berücksichtigt, die ausserhalb eines gewissen Höhenbandes liegen. In gleicher Weise kann die Böschung 11 von dem darauf befindlichen Bewuchs separiert werden. Insbesondere können die Ansätze zur Separation in mehreren Durchläufen mit unterschiedlichem Trennungsvermögen bzw. Schwellwerten angewendet werden, so dass eine stufenweise Auswahl und Trennung erfolgt.

Fig.12 zeigt verschiedene Systeme zur Aufnahme oder Aktualisierung von erfindungsgemäss verwendbaren Punktwolken 1c. Eine zu bearbeitende Oberfläche wird zur Ableitung von Steuerbefehlen mit einem Gitternetz von horizontalen Positionen P überzogen, an denen ein Steuerbefehl erforderlich oder wünschenswert ist. Diesen horizontalen Positionen P ist eine Punktwolke 1c überlagert, die als Träger der Informationen über den Ist-Zustand dient. Diese Punktwolke 1c kann durch ein Luftfahrzeug 13 oder einen erdgestützten Scanner 14 aufgenommen bzw. aktualisiert werden. Existiert eine Punktwolke 1c, welche den Ist-Zustand repräsentiert, so kann - insbesondere soweit Veränderungen vorwiegend durch Bearbeitungsschritte erfolgen - die Aktualisierung auch durch die bearbeitenden Geräte oder die Baumaschine 3 erfolgen. Eine vorteilhafte Lösung stellt die Anbringung eines Zeilenscanners 15 im hinteren Bereich der Baumaschine 3 dar, wobei der Zeilenscanner 15 in vertikaler oder auch schräg geneigter Richtung scannen kann. Hierdurch wird durch die Baumaschine 3 der von ihr selbst modifizierte Bereich aufgenommen und zur Aktualisierung in die Punktwolke 1c eingepasst. Grundsätzlich kann mit einer so ausgestatteten Baumaschine 3 jedoch auch die anfängliche Punktwolke 1c aufgenommen werden, indem der gesamte relevante Bereich abgefahren und/oder der Zeilenscanner 15 entsprechend bewegt wird.

In den Figuren sind die Modelle, Punktwolken, Oberflächen und verwendeten Geräte rein schematisch dargestellt. Insbesondere können aus den Darstellungen keine Grössenverhältnisse oder Details der Aufnahme, Speicherung und Analyse bzw. Bildverarbeitung oder Mustererkennung entnommen werden. Die nur exemplarisch dargestellten Oberflächenpunkte oder Punkte eines Modells des Stands der Technik stehen stellvertretend auch für komplexere Strukturen bzw. eine grössere Anzahl von Oberflächenpunkten in einer Punktwolke.

## Patentansprüche

1. Verfahren zur Steuerung einer oberflächenverändernden Maschine (3)
mit den Schritten
• Bereitstellen von Informationen über den Soll-Zustand einer zu bearbeitenden Oberfläche,
• Bereitstellen einer mit einem entfernungsmessenden Scannersystem aufgenommenen Punktwolke (1c) als räumliche Verteilung diskreter Oberflächenpunkte (5) und als Information über den Ist-Zustand der Oberfläche,
• Ableiten einer Steueranweisung für die Maschine (3) durch Vergleich von Soll-Zustand und Punktwolke (1c),
• Steuern der Maschine (3) gemäss der abgeleiteten Steueranweisung,
**dadurch gekennzeichnet, dass**
für eine räumliche Position (P) beim Ableiten der Steueranweisung der Vergleich von Soll-Zustand und Punktwolke (1c) wenigstens zwei Oberflächenpunkte (5) der Punktwolke (1c) berücksichtigt, insbesondere miteinander verknüpft.

2. Verfahren nach Anspruch 1,
**dadurch gekennzeichnet, dass**
beim Ableiten der Steueranweisung der Vergleich von Soll-Zustand und Punktwolke (1c) für jede räumliche Position (P) des Soll-Zustands Oberflächenpunkte (5) von wenigstens zwei räumlichen Positionen (P) des Ist-Zustandes berücksichtigt.

3. Verfahren nach einem der vorangegangenen Ansprüche,
**dadurch gekennzeichnet, dass**
den wenigstens zwei Oberflächenpunkten (5) wenigstens eine Oberfläche, insbesondere eine Ebene, zugeordnet wird, welche eine mögliche aktuelle Oberfläche des Ist-Zustand repräsentiert oder approximiert.

4. Verfahren nach Anspruch 3,
**dadurch gekennzeichnet, dass**
die zugeordnete Oberfläche durch wenigstens eines der folgenden Verfahren abgeleitet wird
- Methode der kleinsten Fehlerquadrate,
- Methode der unscharfen Mengen,
- Verfahren der Bildverarbeitung,
- Mustererkennung,
- Heuristiken.

5. Verfahren nach einem der vorangehenden Ansprüche,
**dadurch gekennzeichnet, dass**
beim Ableiten der Steueranweisung für jede räumliche Position (P) des Ist-Zustands die räumliche Differenz, insbesondere Höhendifferenz, von wenigstens zwei zugeordneten Oberflächenpunkten (5) berücksichtigt wird.

6. Verfahren nach einem der vorangehenden Ansprüche,
**dadurch gekennzeichnet, dass**
das Bereitstellen der Punktwolke (1c) eine Aktualisierung der Punktwolke (1c) während der Durchführung des Verfahrens beinhaltet, insbesondere durch eine abtastende Erfassung eines bearbeiteten Oberflächenabschnitts, vorzugsweise als LIDAR-Scan.

7. Verfahren nach Anspruch 6,
**dadurch gekennzeichnet, dass**
beim Bereitstellen der Punktwolke (1c) eine Einpassung des bearbeiteten Oberflächenabschnitts in die Punktwolke (1c) durch
- Verfahren der Bildverarbeitung und/oder
- Verfahren der Mustererkennung und/oder
- absolute Referenzierung des Scan-Fixpunktes erfolgt.

8. Verfahren nach einem der vorangehenden Ansprüche,
**dadurch gekennzeichnet, dass**
die Punktwolke (1c) aus unterscheidbaren Teilmengen von Oberflächenpunkten (5) zusammengesetzt ist, insbesondere wobei den jeweiligen Teilmengen eine charakterisierende Grösse, z.B. eine Zeitmarke oder ein Spektralbereich, zugeordnet ist.

9. Verfahren nach einem der vorangehenden Ansprüche,
**dadurch gekennzeichnet, dass**
die der räumlichen Position (P) zugeordnete Zahl von Oberflächenpunkten (5), insbesondere zeitlich oder örtlich, variabel ist.

10. Verfahren nach einem der vorangehenden Ansprüche,
**dadurch gekennzeichnet, dass**
die der räumlichen Position (P) zugeordneten Oberflächenpunkte (5), insbesondere durch die Verwendung einer Gewichtsfunktion, aggregiert werden.

11. Computerprogrammprodukt als Aufzeichnung auf einem Datenträger zur Durchführung des Verfahrens nach einem der Ansprüche 1 bis 10.

## Claims

1. A method for controlling a surface-modifying machine (3)
comprising the steps
• provision of information about the desired condition of a surface to be prepared,
• provision of a point cloud (1c) recorded by a distance-measuring scanner system as a spatial distribution of discrete surface points (5) and as information about the actual condition of the surface,
• derivation of a control instruction for the machine (3) by comparison of desired condition and point cloud (1c),
• control of the machine (3) according to the derived control instruction,
• wherein, for a spatial position (P), the comparison of desired condition and point cloud (1c) uses at least two surface points (5) of the point cloud (1c), in particular links said surface points with one another, when deriving the control instruction.

2. The method as claimed in claim 1, wherein the comparison of desired condition and point cloud (1c) for each spatial position (P) of the desired condition uses surface points (5) of at least two spatial positions (P) of the actual condition when deriving the control instruction.

3. The method as claimed in either of the preceding claims, wherein at least one surface, in particular one plane, which represents or approximates a possible actual surface of the actual condition is coordinated with the at least two surface points (5).

4. The method as claimed in claim 3, wherein the assigned surface is derived by at least one of the following methods
- least squares method,
- fuzzy logic method,
- image processing method,
- pattern recognition,
- heuristic method.

5. The method as claimed in any of the preceding claims, wherein, for each spatial position (P) of the actual condition, the spatial difference, in particular height difference, of at least two assigned surface points (5) is used when deriving the control instruction.

6. The method as claimed in any of the preceding claims, wherein the provision of the point cloud (1c) includes an update of the point cloud (1c) while carrying out the method, in particular by scanning of a prepared surface section, preferably as a LIDAR scan.

7. The method as claimed in claim 6, wherein, on provision of the point cloud (1c), fitting of the prepared surface section into the point cloud (1c) is effected by
- image processing methods and/or
- pattern recognition methods and/or
- absolute referencing of the scan fixed point.

8. The method as claimed in any of the preceding claims, wherein the point cloud (1c) is composed of distinguishable subsets of surface points (5), in particular a characterizing quantity, for example a time mark or a spectral range, being coordinated with the respective subsets.

9. The method as claimed in any of the preceding claims, wherein the number of surface points (5) which is coordinated with the spatial position (P) is variable, in particular as a function of time or location.

10. The method as claimed in any of the preceding claims, wherein the surface points (5) coordinated with a spatial position (P) are aggregated, in particular by the use of a weighting function.

11. A computer program product as a record on a data medium or in the form of a data signal for carrying out the method as claimed in any of claims 1 to 10.

## Revendications

1. Procédé pour contrôler un engin pour modifier les surfaces (3) avec les étapes :
• mise à disposition d'informations sur l'état désiré d'une surface à traiter,
• mise à disposition d'un nuage de points (1c), enregistré avec un système de scanner qui mesure les distances, comme distribution spatiale de points de surface discrets (5) et comme information sur l'état réel de la surface,
• dérivation d'une instruction de contrôle pour l'engin (3) par comparaison de l'état désiré et du nuage de points (1c),
• contrôle de l'engin (3) selon l'instruction de contrôle dérivée,
**caractérisé en ce**
**que**, pour une position spatiale (P) lors de la dérivation de l'instruction de contrôle, la comparaison de l'état désiré et du nuage de points (1c) prend en considération au moins deux points de surface (5) du nuage de points (1 c), en particulier les enchaîne l'un à l'autre.

2. Procédé selon la revendication 1,
**caractérisé en ce**
**que**, lors de la dérivation de l'instruction de contrôle, la comparaison de l'état désiré et du nuage de points (1c) prend en considération, pour chaque position spatiale (P) de l'état désiré, des points de surface (5) d'au moins deux positions spatiales (P) de l'état réel.

3. Procédé selon l'une des revendications précédentes,
**caractérisé en ce**
**qu'**au moins une surface, en particulier un plan, est assigné aux deux points de surface (5) qui existent au moins, surface qui représente ou s'approche d'une surface actuelle possible de l'état réel.

4. Procédé selon la revendication 3,
**caractérisé en ce**
**que** la surface assignée est dérivée par au moins l'un des procédés suivants
- méthode des moindres carrés,
- méthode des quantités floues,
- procédé de traitement d'images,
- reconnaissance de modèle,
- heuristique.

5. Procédé selon l'une des revendications précédentes,
**caractérisé en ce**
**que**, lors de la dérivation de l'instruction de contrôle, la différence spatiale, en particulier la différence de hauteur, d'au moins deux points de surface assignés (5) est prise en considération pour chaque position spatiale (P) de l'état désiré.

6. Procédé selon l'une des revendications précédentes,
**caractérisé en ce**
**que** la mise à disposition du nuage de points (1c) contient une actualisation du nuage de points (1c) pendant l'exécution du procédé, en particulier par une détection par balayage d'une section de surface traitée, de préférence comme balayage LIDAR.

7. Procédé selon la revendication 6,
**caractérisé en ce**
**que**, lors de la mise à disposition du nuage de points (1c), une adaptation de la section de surface traitée est réalisée dans le nuage de points (1c) par
- procédé de traitement d'images et/ou
- procédé de la reconnaissance de modèle et/ou
- référencement absolu du point fixe de balayage.

8. Procédé selon l'une des revendications précédentes,
**caractérisé en ce**
**que** le nuage de points (1c) est assemblé à partir de quantités partielles discernables de points de surface (5), en particulier une grandeur caractérisante, par exemple une marque de temps ou une zone spectrale, étant assignée aux quantités partielles respectives.

9. Procédé selon l'une des revendications précédentes,
**caractérisé en ce**
**que** le nombre de points de surface (5) qui est assigné à la position spatiale (P), est variable en particulier dans le temps ou localement.

10. Procédé selon l'une des revendications précédentes,
**caractérisé en ce**
**que** les points de surface (5) assignés à la position spatiale (P) sont agrégés, en particulier par l'utilisation d'une fonction de poids.

11. Produit de programme d'ordinateur comme enregistrement sur un support de données pour exécuter le procédé selon l'une des revendications 1 à 10.
